(19) Europäisches Patentamt

European Patent Office

Office européen des brevets

(11) **EP 1 339 093 A2**

(12) **EUROPEAN PATENT APPLICATION**

(43) Date of publication:
27.08.2003 Bulletin 2003/35

(51) Int Cl.[7]: **H01J 61/44**, C09K 11/76

(21) Application number: 03251049.7

(22) Date of filing: 21.02.2003

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **21.02.2002 US 80226**

(71) Applicant: **GENERAL ELECTRIC COMPANY**
**Schenectady, NY 12345 (US)**

(72) Inventors:
• **Soules, Thomas F.**
**Richmond Heights, Ohio 44143 (US)**
• **Jansma, Jon B.**
**Pepper Pike, Ohio 44124 (US)**

(74) Representative: **Pedder, James Cuthbert et al**
**GE London Patent Operation,**
**Essex House,**
**12/13 Essex Street**
**London WC2R 3AA (GB)**

(54) **Fluorescent lamp with single phosphor layer**

(57) A fluorescent lamp (10) includes a coating (16) comprising a blue-green emitting halophosphate in combination with rare-earth phosphors, such as a red-emitting rare earth phosphor and a green-emitting rare earth phosphor. The blue-green emitting halophosphate replaces some or all of the blue-emitting rare earth phosphor conventionally used in lamps designed to have a high color rendition index (CRI). This combination of phosphors is preferably blended with a white-emitting halophosphate in a ratio of about 1:3, providing a blend which is suitable for providing a single coating layer for the lamp. The single layer coated lamp has a CRI which is comparable to that of a lamp formed with a conventional two phosphor layer coating process, without appreciably increasing the content of rare earth phosphors used.

Fig. 1

EP 1 339 093 A2

**Description**

The present invention relates generally to fluorescent lamps and more particularly to a low pressure mercury vapor discharge fluorescent lamp having a single phosphor coating layer.

Fluorescent lamps typically contain at least one phosphor layer and optionally a separate barrier layer. The barrier layer, typically of alumina or silica, is applied between the phosphor layer or layers and the glass tube to improve lumen maintenance, improve phosphor utilization, reduce mercury consumption, reduce end discoloration, and improve lamp appearance.

Currently, phosphor coatings for fluorescent lamps include two layers. The first layer is applied closest to the glass tube and is a halophosphate phosphor, which has the same correlated color temperature (CCT) as the final lamp. Such phosphors are relatively inexpensive to manufacture. However, the color rendition index (CRI or $R_A$) of such halophosphates is relatively low. For example, a "Warm White" halophosphate (CCT is approximately 3000K) has a CRI of about 50, while a " Cool White" halophosphate (CCT approximately 4000K) has a CRI of about 60. The second layer is applied over the first after drying the halophosphate coating, and is generally a blend of three rare earth phosphors, a red-emitting phosphor, a green-emitting phosphor, and a blue-emitting phosphor. Yttrium oxide ($Y_2O_3$) that is europium ($Eu^{3+}$) activated (YEO) is a typical red-emitting phosphor. For the green-emitting phosphor, lanthanum phosphate activated with cerium and terbium (LAP) or cerium magnesium aluminate activated with terbium (CAT) are often used. A blue-emitting phosphor, such as strontium, calcium, barium chlorapatite activated with europium ($Eu^{2+}$) (SECA) or barium, magnesium aluminate activated with europium ($Eu^{2+}$) (BAM) is used as the third phosphor in the rare earth phosphor blend. The rare earth materials used in the tri-phosphor blend are relatively expensive, thus it is desirable to use as little of this material as possible. By applying the rare earth phosphor on top of the halophosphate layer, and next to the discharge, a disproportionate amount of the UV light of the discharge is absorbed in this layer, and thus less of the rare earth phosphor is needed. The tri-phosphor blend has a higher CRI than the halophosphate, typically around 82.

For example, T12 lamps (i.e., fluorescent lamps having a diameter of 1.5 inches, about 35 mm) often labeled SP or 70 series having a color rendition index (CRI) of approximately 70-75 at a color temperature of about 4000K are produced by depositing a 4.5-5.5 g/4 foot length (about 3.2 to 3.9 mg/cm$^2$ of tube surface area) of halophosphate coating. This is followed by a thin, approximately 1.0g/4 foot length (about 0.7 mg/cm$^2$ of tube surface area) layer of the triphosphor blend on a T12 lamp. These lamps are often labeled 740 because the CRI value is in the low 70's and the color temperature is about 4000K. Such lamps have good luminous efficiency, typically 78-80 lumens per watt (LPW). About fifty percent of the UV of the discharge is absorbed by the inner-most rare earth phosphor layer, the remainder being absorbed by the halophosphate layer. Using a thicker layer of the triphosphor blend, e.g., 1.8-2 g/4 foot length (about 1.3 to 1.4 mg/cm$^2$ of tube surface area) for the T12 lamp achieves a higher CRI, typically approximately 80. Such a lamp is labeled 840 or SPX 40.

Many existing production processes for fluorescent lamp manufacturing do not have the capability for efficiently applying two phosphor coating layers. Each coating step requires significant equipment and labor. Even when double coating processes are available, a two-coat process can be difficult due to interactions between the first layer and the second layer during the second coating step. For example, unless the first coating is dried in such a way as to adhere well to the glass, part of it may be washed off when the second coating is applied.

U.S. Patent No. 5,838,100 discloses a single layer phosphor coating for a fluorescent lamp comprising a phosphor blend containing three rare earth phosphors, which is at least 20 weight percent alumina. The alumina scatters the UV and allows the use of a lower triphosphor coating weight. However, the amount of tri-phosphor blend used to provide a desired CRI is higher than in a conventional two-coat system. Thus, the single coat layer may be more expensive to produce.

The present invention provides a new and improved phosphor coating and method of use, which overcomes the above-referenced problems, and others.

In an exemplary embodiment of the present invention, a mercury vapor discharge lamp is provided. The lamp includes an envelope and means for providing a discharge. A discharge-sustaining fill of mercury and an inert gas are sealed inside the envelope. A phosphor-containing layer is coated inside the envelope. The phosphor-containing layer includes a blend of phosphors, including a blue-green emitting halophosphate, a red-emitting phosphor, and a green-emitting phosphor.

In another exemplary embodiment of the present invention, a method of forming a lamp is provided. The method includes forming a blend of phosphors. The blend of phosphors includes a blue-green emitting halophosphate, a red-emitting phosphor, and a green-emitting phosphor. A coating comprising the blend of phosphors is formed on a wall of an envelope. A fill is sealed inside the envelope. The fill includes mercury and an inert gas.

In another exemplary embodiment of the present invention, a method providing a light source is provided. The method includes depositing only a single phosphor layer on a surface of an envelope. The phosphor layer includes a blend of phosphors including a white-emitting halophosphate, a blue-green emitting halophosphate, a red-emitting phosphor, and a green-emitting phosphor. A discharge is initiated within the envelope thereby generating light. A portion of the light is converted to light of a different wavelength by the phosphor coating such that light emitted from the envelope has a color rendition index (CRI) of at least 70.

One advantage of at least one embodiment of the present invention is that a single layer phosphor coating is formed with a high color rendition index.

The invention will now be described in greater detail, by way of example, with reference to the drawings, in which:-

FIGURE 1 is a side view, in partial section, of a fluorescent lamp according to the present invention.

FIGURE 2 is a plot of the spectral power distribution over the wavelength range 390-750 nm for a triphosphor blend according to the present invention.

FIGURE 3 is a plot of the spectral power distribution over the wavelength range 390-750 nm for a Cool White Halophosphor suitable for blending with the triphosphor blend according to the present invention.

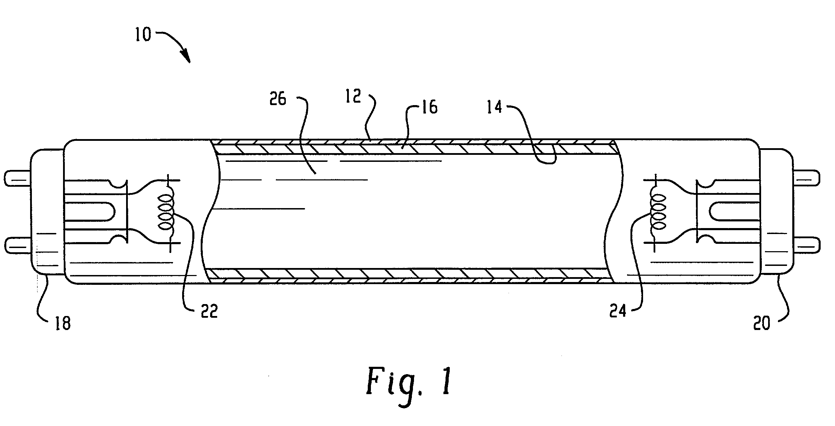

FIGURE 1 shows a representative low pressure mercury vapor discharge fluorescent lamp 10. It will be appreciated that a variety of fluorescent lamps may be used with the present invention, including single or double ended lamps, curved or straight lamps, and electrodeless lamps. The fluorescent lamp 10 has a light-transmissive tube or envelope 12 formed from glass or other suitable material, which has a circular cross-section. An inner surface 14 of the glass envelope is provided with a phosphor-containing layer 16 (not to scale). The lamp is hermetically sealed by bases 18, 20, attached at ends of the tube, respectively. Two spaced electrodes 22, 24 are respectively mounted on the bases 18, 20. A discharge-sustaining fill 26, preferably formed from mercury and an inert gas, is sealed inside the glass tube. The inert gas is typically argon or a mixture of argon and other noble gases at low pressure, which, in combination with a small quantity of mercury, provide the low vapor pressure manner of operation.

The phosphor-containing layer 16 is preferably utilized in a low pressure mercury vapor discharge lamp, as described, but may also be used in a high pressure mercury vapor discharge lamp. It may be used in fluorescent lamps having electrodes as is known in the art, as well as in electrodeless fluorescent lamps as are known in the art, where the means for providing a discharge is a structure which provides high frequency electromagnetic energy or radiation.

As is known in the art, phosphors change the wavelength spectra of light striking the phosphor so that the emission spectrum of a lamp can be adjusted. Non-useful light, such as light in the UV range of the spectrum, can be converted to useful light in the visible range. The phosphor-containing layer 16 contains a blend of phosphor particles which are selected to achieve a desired color quality, which may be expressed in terms of its color rendition index (CRI or $R_A$). The color rendition index is a measure of the degree to which the psycho-physical colors of objects illuminated by a light source conform to those of a reference illuminant for specified conditions. CRI is, in effect, a measure of how well the spectral distribution of a light source compares with that of an incandescent (blackbody) source, which has a Planckian distribution between the infrared (over 700 nm) and the ultraviolet (under 400 nm). In general, the phosphors which characterize phosphor mixtures have discrete spectra which will yield good color rendering of objects whose colors match the spectral peaks, but not as good rendering of objects whose colors lie between the spectral peaks. By combining phosphors having complementary spectra, a good color rendering over the entire spectra may be achieved.

The layer 16 preferably comprises a blend of at least three phosphors, more preferably, four phosphors. The first phosphor is a halophosphate phosphor or other relatively inexpensive phosphor which emits a white light referred to herein as a white-emitting Halo. Halophosphates include at least one halogen component, preferably chlorine or fluorine, or a mixture thereof. Suitable halophosphate phosphors include calcium fluoro-, chloro phosphate activated with antimony (3+) and manganese (2+), or alternatively another halophosphate phosphor as known in the art. The ratio of fluoride to chloride and the amount of manganese in the halophosphate are adjusted to give the desired color of the lamp, as is known in the art. The white emitting halo may have the general formula:

$$Ca_{5-x-y}(PO_4)_3F_{1-z-y}Cl_zO_y:Mn_xSb_y,$$

where

$$0.03 < x < 0.22;$$

$$0.03 < y < 0.07;$$

and

$$0.02 < z < 0.2.$$

For example for a "730" lamp, a halophosphate with a color temperature of approximately 3000K, known as "Warm White" is used. For "740" lamps, a halophosphate known as "Cool White" is used. Cool White has a color temperature of about 4100K. Cool White has two distinct spectral peaks. One peak is at about 480 nm and a has ½ width of about 80-100 nm. The other peak is at about 580 nm and has a ½ width of about 70 nm. Warm white has the same two peaks, but due to a higher proportion of Mn, the peak at 580 nm is more intense. White halophosphor can also be used. It has a color temperature of 3500K. These halophosphates have the same (or approximately the same) correlated color temperature as the final lamp. The white emitting halo halophosphates thus disclosed may comprise 50-90% by weight of the blend, more preferably, 60-80 wt%, most preferably, about 70 wt% of the phosphor blend.

The phosphor blend also includes a combination of phosphors which are referred to herein generally as a triphosphor blend, but which may contain fewer or more than three phosphors. The triphosphor blend includes a combination of phosphors with complementary emission spectra, which, when blended together, provide a high CRI, preferably over 80, more preferably, over 85, and most preferably, about 90 or higher. The triphosphor blend preferably includes at least one rare earth phosphor, preferably a blend of two or more rare earth phosphors. A first of the rare earth phosphors is preferably a red emitting phosphor, such as yttrium oxide activated with europium (3+) (YEO). This phosphor has a peak at about 611 nm and a ½ width of less than 10 nm. A second rare earth phosphor in the blend is preferably a green-emitting phosphor. Suitable green emitting phosphors are terbium-activated phosphors, such as lanthanum phosphate activated with cerium (3+) and terbium (3+) (LAP), Cerium magnesium aluminate activated with terbium ($CeMgAl_{11}O_{19}:Tb^{3+}$) (CAP), or gadolinium magnesium pentaborate activated with terbium and cerium. LAP, for example, has a peak at about 545 nm and a ½ width of less than 10 nm. The triphosphor blend may additionally or alternatively contain other rare earth phosphors, such as a blue-emitting phosphor, e.g., strontium, calcium, barium chlorapatite activated with europium ($Eu^{2+}$) (SECA) or barium magnesium aluminate activated with europium ($Eu^{2+}$) (BAM). SECA has a peak at about 447 nm and a ½ width of about 50 nm.

The YEO phosphor may have the general formula:

$$(Y_{(1-x)}Eu_x)_2O_3,$$

where

$$0 < x < 0.1$$

Preferably,

$$0.02 < x < 0.07$$

The LAP phosphor may have the general formula:

$$(La_{(1-x-y)}Ce_x\, Tb_y)PO_4,$$

where

$$0.1 < x < 0.6;\ 0 < y < 0.25$$

Preferably,

$$0.2 < x < 0.4; \ 0.1 < y < 0.2$$

The SECA phosphor may have the general formula:

$$(Sr_{(1-x-y-z)}Ba_x \, Ca_y \, Eu_z)_{10}(PO_4)_6Cl_2, \text{ where } 0 < x < 0.3; \ 0 < y < 0.2; \ 0 < z < 0.2,$$

Preferably,

$$0.05 < x < 0.15;$$

$$0.01 < y < 0.1; \ 0.005 < z < 0.0015$$

Another phosphor in the triphosphor blend is a blue-green emitting phosphor, such as a calcium halophosphate (e.g, fluorophosphate) activated with antimony (3+). Such blue-green emitting halophosphors are hereinafter referred to as Blue Halo. The Blue Halo may have the general formula:

$$Ca_{5-y}(PO_4)_3F_{1-y}O_y{:}Sb_y,$$

where

$$0.03 < y < 0.07.$$

The Blue Halo thus differs from the White emitting Halo in that it is free, or substantially free of manganese. Although the above formula also shows an absence of chlorine, small amounts of chlorine may be present in place of some of the fluorine in the Blue Halo.

The Blue Halo phosphor, being a halophosphor, has the advantage of being relatively inexpensive. Unlike the other halophosphors in the blend, however, it has the ability of combining with the rare earth phosphors to give a high CRI. When the Blue halo is used, a much smaller amount of the rare earth phosphors is needed to achieve a desired overall CRI for the phosphor blend.

The blend of three phosphors, such as YEO, LAP, and Blue Halo together achieve a high CRI, of about 90. Hence, to achieve a CRI in the low 70's, comparable to a two coat 740 lamp, only about 30% of the YEO/LAP/Blue Halo mix is needed in a single coat blend, the balance being the White Halo.

The Blue Halo is a broad band emitting phosphor with a peak at around 480 nm and a ½ width of about 100nm. It may also replace some of the LAP or other green-emitting rare earth phosphor. Accordingly, the amount of green emitting phosphor in the blend can be reduced as compared with a conventional triphosphor blend. Because of its broad peak, the Blue Halo can also be used in place of some or all of a conventional blue emitting phosphor, such as SECA or BAM. SECA has a peak at about 447 nm and a ½ width of 50 nm.

The Blue Halo preferably comprises about 10-50 weight % of the tri-phosphor blend, more preferably, 20-40 weight %, most preferably, about 30 weight % of the triphosphor blend. The amount of Blue Halo in the total phosphor blend will vary according to the amount of the triphosphor blend in the overall blend. For example, when the triphosphor blend accounts for 30 % by weight of the total phosphor blend, the Blue Halo preferably accounts for 3-15% of the total phosphor blend.

The blend of phosphors thus preferably includes:

a halophosphate having two broad band peaks, one at around about 570-590 nm and having a ½ width of about 70 nm, the other at around 470-490 nm and having a ½ width of about 100 nm,

a red emitting phosphor having a main peak at 600-620 nm, more preferably, at about 611 nm, and having a ½ width of less than 100 nm, more preferably, less than 50 nm, more preferably less than 30 nm, and most preferably, about 10 nm or less,

a green emitting phosphor having a peak at 535-555 nm, more preferably, at about 545 nm, and having a ½ width of less than 100 nm, more preferably, less than 50 nm, more preferably less than 30 nm, and most preferably, about 10 nm or less,

a halophosphate having a broad peak at around 470-490 nm and a ½ width of about 100 nm,

and optionally a blue emitting phosphor having a peak at 470-510 nm, more preferably, at about 480 nm, and having a ½ width of less than 100 nm, more preferably, less than 50 nm, more preferably less than 30 nm, and most preferably, about 10 nm or less.

A preferred embodiment of the coating includes a triphosphor blend comprising about 49% YEO, about 21% LAP, and about 30% Blue Halo. A coating formed from these three phosphors alone has a CRI of 89 and a light output of about 77 lumens/Watt. This blend may be combined with a White-emitting halo, such as a standard Cool White or Warm White halophosphate in the amount of 10-50 wt% phosphor blend, the balance White-emitting halo, more preferably, about 25-35 wt %, most preferably, about 30 wt%.

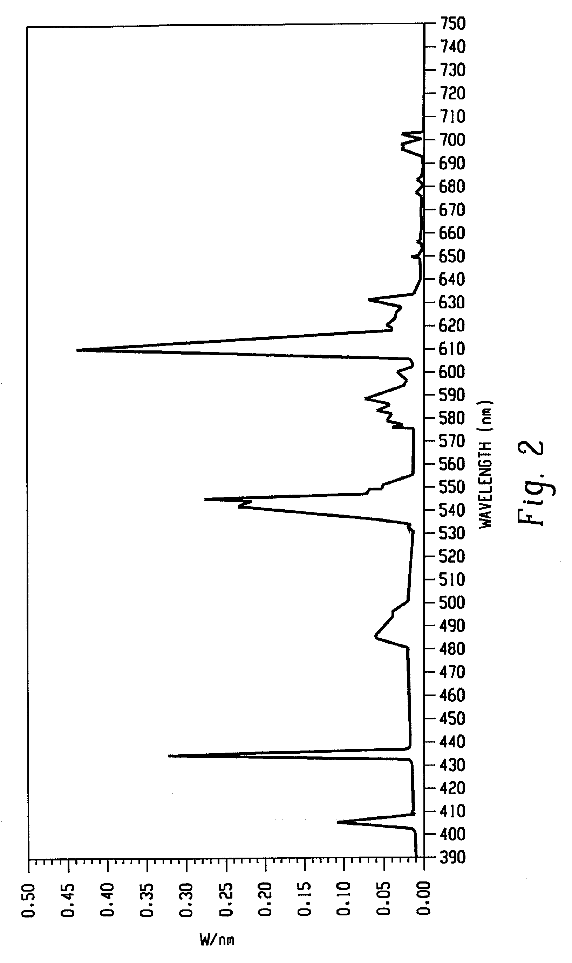

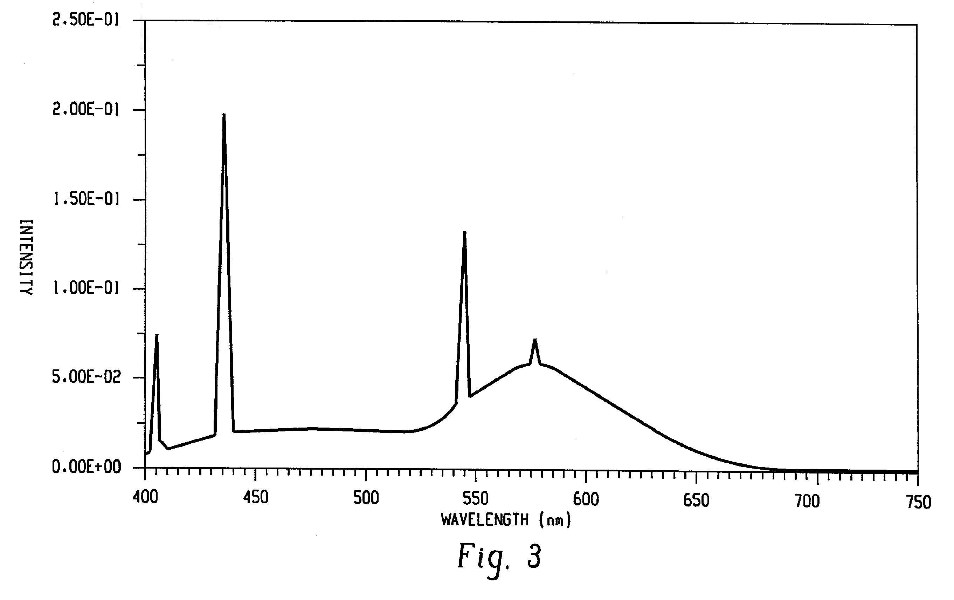

FIGURE 2 is a plot of the spectral power distribution, expressed in terms of watts/nm, over the wavelength range 390-750 nm for a triphosphor blend comprising about 49% YEO, about 21% LAP, and about 30% Blue Halo. FIGURE 3 is a plot of the spectral power distribution over the wavelength range 390-750 nm for a Cool White phosphor suitable for blending with the triphosphor blend to form a phosphor blend for coating the lamp.

The phosphor-containing layer 16 may contain, in addition to the phosphor blend, other ingredients, such as alumina. The layer 16 is preferably free from the presence of silica.

The phosphor-containing layer 16 is provided on the lamp as follows. The phosphor particles or powders are blended by weight in a blender for about two hours to provide the powder blend. The resulting powder is then dispersed in a water vehicle with a dispersing agent, such as ammonium polyacrylate, and a nonionic surfactant, such as nonylphenyl-ethoxylate. Then a thickener is added, typically polyethylene oxide, and optionally other dispersing agents, surfactants, and thickeners known in the art. The resulting suspension is typically about 5-20 weight percent phosphor powder, 0.5-3 weight percent dispersing agent, 0.05-0.3 weight percent surfactant, and 1-5 weight percent thickener. The suspension is then applied as a coating to the inside of the glass tube and heated to dry the coating. In the heating stage the binders and other components other than the phosphors are driven off, leaving a phosphor layer. The phosphor-containing layer is applied so that the weight of phosphor in the layer (the "coating weight") is about 4.5-6 g phosphor /4 foot length of a T12 tube (3.1-4.2 mg/cm$^2$ of tube wall), more preferably, about 5 g phosphor /4 foot length of a T12 tube (about 3.5 mg/cm$^2$ of wall.

The single coatings described above are designed to replace the two coat systems conventionally used. It will be appreciated that the triphosphor blend disclosed may be applied without the White-emitting halo.

Although the single coating layer 16 is capable of providing a lamp with a good color rendition index without the need for additional coating layers, it is contemplated that the lamp may have an additional phosphor coating layer or layers inside the glass envelope (not shown). However, the layer 16 is preferably the layer closest to the arc when additional phosphor layers are employed. Alternatively or additionally, the additional layer may comprise a layer of a UV-absorbing or reflecting layer. For example, the lamp may have a layer of alumina or silica between the phosphor-containing layer 16 and the glass tube 12.

The following non-limiting Examples further illustrate various aspects of the invention.

EXAMPLES

T12 lamps were coated with either a dual coating system or a single coat system to provide a nominal color temperature of 4100K. Coating weights are expressed as the weight of phosphor / 4 foot length of the T12 tube. These weights can be converted into mg/cm$^2$ of tube wall by multiplying the weights given by a factor of approximately 0.7. Table 1 shows the results obtained. x and y are the color coordinates.

As can be seen from Table 1, a good color rendition (CRI=73), comparable to, or slightly higher than that of a two coat lamp (CRI=71), was achieved with a single coat system. The total weight of the rare earth phosphors in the single coat was 1.15 g, only slightly more than the weight of rare earth phosphors used in the two-coat process (1.00g). The lumen/Watt for both lamps was very similar. Thus, it is seen that a single coat may be used in place of a two coat system without appreciably adding to the material costs and achieving significant processing cost savings by eliminating a second coating operation.

TABLE 1

| Lamp Type | SP40 or 740 T12 40W 4 Foot Lamp with Two-Layer Phosphor Coating | SP40 or 740 T12 40W 4 Foot Lamp with New Single Layer Coating |
|---|---|---|
| Nominal Color temperature | 4100K | 4100K |
| Phosphor Composition of First Coating | 4.5 g Cool White | 3.85g Cool White<br>0.81 g YEO<br>0.34g LAP<br>0.50g Blue Halo |
| Phosphor Composition of Second Coating | 0.54 g YEO<br>0.34g LAP<br>0.12g SECA | --- |
| X | 0.381 | 0.383 |
| Y | 0.382 | 0.384 |
| Ra | 71 | 73 |
| 100 hr lumens/watt | 79 | 78 |

For the sake of good order, various aspects of the invention are set out in the following clauses: -

1. A mercury vapor discharge lamp (10) comprising:

an envelope (12);
means for providing a discharge;
a discharge-sustaining fill (26) of mercury and an inert gas sealed inside said envelope; and
a phosphor-containing layer (16) coated inside said envelope, said phosphor-containing layer including a blend of phosphors, including:

a blue-green emitting halophosphate;
a red-emitting phosphor; and
a green-emitting phosphor.

2. The lamp (10) according to clause 1, wherein the blend of phosphors further includes a white-emitting halophosphate.

3. The lamp (10) according to clause 1, wherein the blue-green emitting halophosphate has the general formula: $Ca_{5-y}(PO_4)_3F_{1-y}O_y:Sb_y$, where

$$0.03<y<0.07.$$

4. The lamp (10) according to clause 2, wherein the white-emitting halophosphate has the general formula: $Ca_{5-x-y}(PO_4)_3F_{1-z-y}Cl_zO_y:Mn_xSb_y$ , where

$$0.03<x<0.22;$$

$$0.03<y<0.07;$$

and

$0.02 < z < 0.2$.

5. The lamp (10) according to clause 1, wherein at least one of the red-emitting phosphor and the green-emitting phosphor includes a rare-earth phosphor.

6. The lamp (10) according to clause 5, wherein the green-emitting phosphor is a terbium-activated phosphor selected from the group consisting of lanthanum phosphate activated with cerium (3+) and terbium (3+) (LAP), cerium magnesium aluminate activated with terbium (CAP), and gadolinium magnesium pentaborate activated with terbium and cerium.

7. The lamp (10) according to clause 5, wherein the red-emitting phosphor includes yttrium oxide activated with europium (3+) (YEO).

8. The lamp (10) according to clause 5, wherein the red-emitting phosphor and the green emitting phosphor are both rare earth phosphors and the ratio of blue-green emitting halophosphate to rare earth phosphors is from 10: 9 to 1:1.

9. The lamp (10) according to clause 8, wherein the ratio of blue-green emitting halophosphate to rare earth phosphors is from 1:5 to 2:5.

10. The lamp (10) according to clause 9, wherein the ratio of blue-green emitting halophosphate to rare earth phosphors is about 3:10.

11. The lamp (10) according to clause 2, wherein the white-emitting halophosphate is 50-90% by weight of the blend of phosphors.

12. The lamp (10) according to clause 11, wherein the white-emitting halophosphate is 60-80% by weight of the blend of phosphors.

13. The lamp (10) according to clause 12, wherein the white-emitting halophosphate is about 70 wt% by weight of the blend of phosphors.

14. The lamp (10) according to clause 2, wherein the phosphor layer (16) is the only phosphor layer coated inside said envelope (12).

15. The lamp (10) according to clause 2, wherein the phosphor layer (16) has a color rendition index (CRI) of at least 70.

16. The lamp (10) according to clause 1, wherein the phosphor blend is free of blue-emitting rare earth phosphors.

17. A method of forming a lamp (10), the method including:

   forming a blend of phosphors, the blend of phosphors including a blue-green emitting halophosphate, a red-emitting phosphor, and a green-emitting phosphor;
   forming a coating comprising the blend of phosphors on a wall of an envelope (12); and
   sealing a fill (26) inside the envelope, the fill including mercury and an inert gas.

18. The method according to clause 17, wherein the blend of phosphors further includes a white-emitting halophosphate.

19. A method of providing a light source (10), the method including:

   depositing only a single phosphor layer (16) on a surface of an envelope (12), the phosphor layer including a blend of phosphors, the blend of phosphors including a white-emitting halophosphate, a blue-green emitting halophosphate, a red-emitting phosphor, and a green-emitting phosphor; and
   initiating a discharge within the envelope thereby generating light, at least a portion of the light being converted to light of a different wavelength by the phosphor coating such that light emitted from the envelope has a color rendition index (CRI) of at least 70.

**Claims**

1. A mercury vapor discharge lamp (10) comprising:

   an envelope (12);
   means for providing a discharge;
   a discharge-sustaining fill (26) of mercury and an inert gas sealed inside said envelope; and
   a phosphor-containing layer (16) coated inside said envelope, said phosphor-containing layer including a blend of phosphors, including:

   a blue-green emitting halophosphate;
   a red-emitting phosphor; and
   a green-emitting phosphor.

2. The lamp (10) according to claim 1, wherein the blend of phosphors further includes a white-emitting halophosphate.

3. The lamp (10) according to claim 1, wherein the blue-green emitting halophosphate has the general formula: $Ca_{5-x-y}(PO_4)_3F_{1-y}O_y:Sb_y$, where

$$0.03 < y < 0.07.$$

4. The lamp (10) according to claim 2, wherein the white-emitting halophosphate has the general formula: $Ca_{5-x-y}(PO_4)_3F_{1-z-y}Cl_zO_y:Mn_xSb_y$ , where

$$0.03 < x < 0.22;$$

$$0.03 < y < 0.07;$$

and

$$0.02 < z < 0.2.$$

5. The lamp (10) according to claim 1, wherein at least one of the red-emitting phosphor and the green-emitting phosphor includes a rare-earth phosphor.

6. The lamp (10) according to claim 5, wherein the green-emitting phosphor is a terbium-activated phosphor selected from the group consisting of lanthanum phosphate activated with cerium (3+) and terbium (3+) (LAP), cerium magnesium aluminate activated with terbium (CAP), and gadolinium magnesium pentaborate activated with terbium and cerium.

7. The lamp (10) according to claim 5, wherein the red-emitting phosphor includes yttrium oxide activated with europium (3+) (YEO).

8. The lamp (10) according to claim 5, wherein the red-emitting phosphor and the green emitting phosphor are both rare earth phosphors and the ratio of blue-green emitting halophosphate to rare earth phosphors is from 10:9 to 1:1.

9. A method of forming a lamp (10), the method including:

   forming a blend of phosphors, the blend of phosphors including a blue-green emitting halophosphate, a red-emitting phosphor, and a green-emitting phosphor;

forming a coating comprising the blend of phosphors on a wall of an envelope (12); and
sealing a fill (26) inside the envelope, the fill including mercury and an inert gas.

**10.** A method of providing a light source (10), the method including:

depositing only a single phosphor layer (16) on a surface of an envelope (12), the phosphor layer including a blend of phosphors, the blend of phosphors including a white-emitting halophosphate, a blue-green emitting halophosphate, a red-emitting phosphor, and a green-emitting phosphor; and
initiating a discharge within the envelope thereby generating light, at least a portion of the light being converted to light of a different wavelength by the phosphor coating such that light emitted from the envelope has a color rendition index (CRI) of at least 70.

Fig. 1

Fig. 2

Fig. 3

EP 1 339 093 A2